# EUROPÄISCHE PATENTSCHRIFT

(11) **EP 0 815 500 B1**
(45) Veröffentlichungstag und Bekanntmachung des Hinweises auf die Patenterteilung: **20.12.2000**
(21) Anmeldenummer: 96907255.2
(22) Anmeldetag: 22.03.1996
(51) Int. Cl.: G05B 19/416

(54) **VORRICHTUNG ZUR BERÜCKSICHTIGUNG DER REAKTIONSZEIT EINES BETRIEBSMITTELS BEI EINER VON EINEM VERFAHRWEG ABHÄNGIGEN ANSTEUERUNG DESSELBEN**
DEVICE FOR TAKING ACCOUNT OF THE REACTION TIME OF A DEVICE IN A TRAVEL-DEPENDENT CONTROL SYSTEM THEREFOR
DISPOSITIF PERMETTANT DE TENIR COMPTE DU TEMPS DE REACTION D'UN EQUIPEMENT COMMANDE EN FONCTION DU TRAJET DE DEPLACEMENT

(30) Priorität: 24.03.1995 DE 29505468 U
(43) Veröffentlichungstag der Anmeldung: 07.01.1998
(73) Patentinhaber: SIEMENS AKTIENGESELLSCHAFT, 80333 München (DE)
(72) Erfinder: STREICHERT, Gerhard, D-92353 Postbauer-Heng (DE)
(86) Internationale Anmeldenummer: DE9600494
(87) Internationale Veröffentlichungsnummer: WO9630814

(56) Entgegenhaltungen:
- EP-A- 0 135 754

## Beschreibung

In der Automatisierungstechnik ist es vielfach notwendig, insbesondere durch elektronische Steuerungen Aktionen abhängig vom aktuellen Istwert des Verfahrweges eines ersten Betriebsmittels einer technischen Anlage auszulösen. Dieser soll desweiteren als "auslösender Verfahrweg" bezeichnet werden. Hierbei handelt es sich insbesondere um einen linearen oder rotatorischen Verfahrweg eines Elementes innerhalb des ersten Betriebsmittels, z.B. um eine Drehwelle oder einen Schlitten desselben. Der aktuelle Istwert des auslösenden Verfahrweges wird durch einen Positionsgeber erfaßt. So können beim Erreichen vorgegebener Sollwerte entlang dieses Verfahrweges des ersten Betriebsmittels z.B. Binärausgänge der Steuerung aktiviert oder deaktiviert werden. Durch diese elektronischen "Schaltpunkte" kann z.B. der Zustand dieses Betriebsmittels umgeschaltet, bzw. es können ein oder mehrere andere Betriebsmittel in der technischen Anlage betätigt werden, z.B. andere Antriebe bzw. Servomotoren zu- und abgeschaltet werden. In einer speicherprogrammierbaren Steuerung können eine Vielzahl derartiger Wegsollwerte gemeinsam mit jeweils zugeordneten binären Steuerbefehlen für einen auslösenden Verfahrweg hinterlegt werden. Ein bestimmter binärer Steuerbefehl wird dann ausgeführt, wenn der Istwert des auslösenden Verfahrweges die Größe eines dazugehörigen, gespeicherten Wegsollwertes erreicht hat. Eine derartige Anordnung kann auch als ein "elektronisches Nockensteuerwerk" bezeichnet werden.

Dabei tritt häufig das Problem auf, daß bei der hierdurch ausgelösten Aktivierung bzw. Deaktivierung eines betroffenen Betriebsmittels individuelle Reaktionszeiten desselben berücksichtigt werden müssen, bis das Betriebsmittel den jeweils gewünschten Zustand eingenommen hat, also vollständig in Eingriff ist. Diese Verzögerungen bis zur effektiven Auswirkung eines binären Schaltbefehles müssen durch eine Vorsteuerung ausgeglichen werden. Ändert sich dabei der Istwert des eine Zustandsänderung auslösenden Verfahrweges nur gleichmäßig, so ist es ausreichend, die Ausgabe von "Schaltpunkten" um einen festen Wert vorzuverlegen. Kann der auslösende Verfahrweg jedoch mit veränderlichen Geschwindigkeiten durchlaufen werden, so ist es erforderlich, den jeweils aktuellen Wert der Geschwindigkeit zu messen und abhängig davon die "Schaltpunkte" vorzuverlegen.

Wird in diesem Fall der aktuelle Istwert der Geschwindigkeit des eine Zustandsänderung auslösenden Verfahrweges zyklisch in einem festen Zeitraster gemessen, so muß der aktuelle Geschwindigkeitswert unter Berücksichtigung der insbesondere in Form einer Konstanten gespeicherten Reaktionszeit des jeweils anzusteuernden Betriebsmittels der technischen Anlage in einen sogenannten "Verstellweg" umgerechnet werden. Hierbei handelt es sich um die Strecke, die während des Ablaufes der Reaktionszeit des anzusteuernden Betriebsmittels bis zum Erreichen von dessen vollständigem Eingriff noch entlang des auslösenden Verfahrweges des ersten Betriebsmittels zurückgelegt wird, d.h. bis zum endgültigen Erreichen des auslösenden Wegsollwertes. Um die Größe dieses geschwindigkeitsabhängigen Verstellweges muß der auslösende Wegsollwert quasi "verkürzt" werden, damit im Moment des tatsächlichen Erreichens des Wegsollwertes auch das anzusteuernde Betriebsmittel voll im Eingriff ist, d.h. dessen Reaktionszeit abgelaufen ist. Zur Bestimmung dieses Verstellweges wird in der Regel in einer aufwendigen Weise folgende Division ausgeführt :
- Verstellweg =: "aktueller Istwert der Geschwindigkeit entlang dem auslösenden Verfahrweg des ersten Betriebsmittels"
dividiert durch
"Reaktionszeit des anzusteuernden Betriebsmittels".

Aus der EP 1 357 754 A2 ist eine Vorrichtung zur Einstellung der Position der Drehwelle eines Elektromotors bekannt. Hiermit soll ein Bremsvorgang so abschlossen werden, dass die Drehwelle mit Erreichen eines vorgegebenen Lagesollwertes zum Stillstand kommt. Zur Kompensation der Lageänderung der Drehwelle, die auf Grund der für einen Bremsvorgang erforderlichen Reaktionszeit eintritt, werden die aktuelle Wellenposition, sowie deren Geschwindigkeit und Beschleunigung erfasst. Da die den Vorgang auslösenden und anzusteuernden Betriebsmittel in der Art eines sequenziellen Prozesses identisch sind, erfolgt die Kompensation durch einfache Messung des Verstellweges ohne Division.

Der Erfindung liegt die Aufgabe zugrunde, die Berücksichtigung der Reaktionszeit eines im Zustand umschaltbaren Betriebsmittels einer technischen Anlage bei Ansteuerung desselben im Moment des Erreichens von sogenannten Wegmarken auf einem mit veränderlichen Geschwindigkeiten durchlaufbaren Verfahrweg eines anderen Betriebsmittels mittels einer Steuerung aufwandsarm insbesondere ohne diskrete Division zu erreichen.

Die Aufgabe wird gelöst mit der im Anspruch angegebenen Vorrichtung.

Gemäß der Erfindung ist die Dauer des Meßzyklusses für die Erfassung einer dem aktuellen Wert der Verfahrgeschwindigkeit entlang dem auslösenden Verfahrweg eines Betriebsmittels der technischen Anlage entsprechenden Größe nicht konstant. Vielmehr entspricht die Dauer der Messung genau der Reaktionszeit desjenigen Betriebsmittels derselben bzw. einer anderen technischen Anlage, welches bei Erreichen vorgegebener Sollwerte des auslösenden Verfahrweges aktiviert bzw. deaktiviert werden soll, d.h. allgemein dessen Betriebszustand umgeschaltet werden soll. Erfindungsgemäß wird zu Beginn einer Messung der aktuelle Istwert des auslösenden Verfahrweges des ersten Betriebsmittels erfaßt und als ein "Startistwert" gespeichert. Nach Ablauf der gespeicherten Reaktionszeit des anzusteuernden Betriebsmittels, d.h. am Ende des Meßzyklusses, wird wiederum der dann vorliegende aktuellen Istwert des auslösenden Verfahrweges des entsprechenden Betriebsmittels erfaßt und als ein "Endistwert" gespeichert. Erfindungsgemäß wird nun durch eine Differenzbildung von "Endistwert" und "Startistwert" ein sowohl von der aktuellen Verfahrgeschwindigkeit entlang des auslösenden Verfahrweges, als auch von der individuellen Reaktionszeit des anzusteuernden Betriebsmittels abhängiger sogenannter "Vorhaltweg" gebildet.

Schließlich werden die als Wegmarken entlang des auslösenden Verfahrweges dienenden, gespeicherten Wegsollwerte um diesen Vorhaltweg durch Reduktion korrigiert, d.h. sogenannte "korrigierte Wegsollwerte" gebildet. Wird das betroffene Betriebsmittel dann angesteuert, wenn der aktuelle Istwert des Verfahrweges die Größe eines "korrigierten Wegsollwertes" erreicht, so wird hierdurch die Reaktionszeit des bei Erreichen des korrigierten Wertes eines der gespeicherten Wegsollwerte anzusteuernden Betriebsmittels ausgeglichen, da dann der Ausgang einer Steuerung ausreichend rechtzeitig vor Erreichen der ursprünglichen Größe des Wegsollwertes aktiviert wird.

Vorteilhaft wird die erfindungsgemäße Bestimmung des geschwindigkeitsabhängigen Vorhaltweges zyklisch ausgelöst, so daß die als Schaltpunkte dienden, gespeicherten Wegsollwerte immer der aktuellen Verfahrgeschwindigkeit auf dem auslösenden Verfahrweg des ersten Betriebsmittels entsprechend verschoben werden können.

Die Erfindung wird mit den in den nachfolgend kurz angeführten Figuren dargestellten Beispielen weiter erläutert. Dabei zeigt
- Fig.1.: eine beispielhafte Darstellung in Form eines Zeitdiagrammes zur Erläuterung der Erfassung des geschwindigkeitsabhängigen Vorhaltwegs, und
- Fig.2.: das Flußdiagramm einer bevorzugten Anwendung der Erfindung bei einem, eine sogenannte "elektronische Schaltnocke" bildenden Paar aufeinanderfolgender Wegsollwerte.

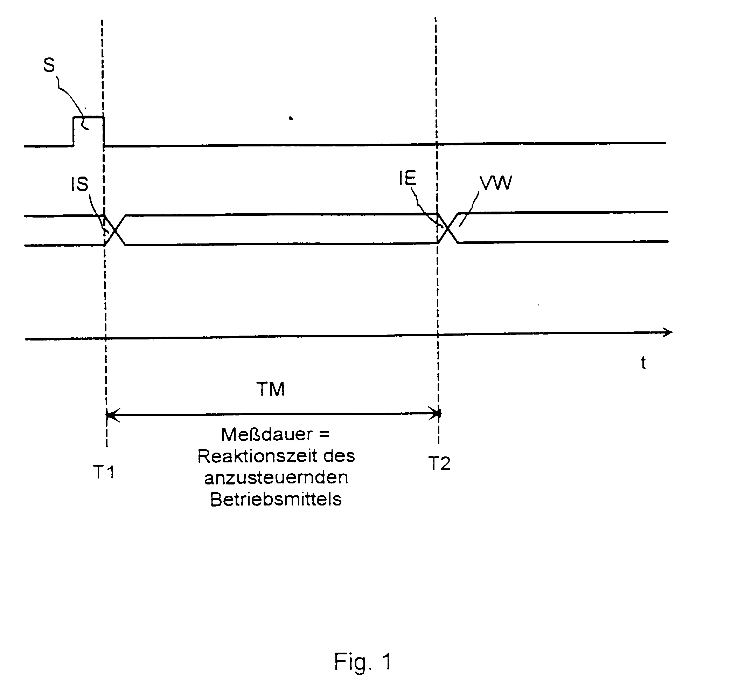

In der Figur 1 ist in Form eines Zeitdiagrammes beispielhaft die Erfassung des geschwindigkeitsabhängigen Vorhaltwegs VW gemäß der Erfindung dargestellt. Dabei wird ein Meßzyklus durch die fallende Flanke eines Startimpulses S ausgelöst. Zu Beginn des Zyklusses im Zeitpunkt T1 wird als "Startistwert" der aktuelle Wert IS des auslösenden Verfahrweges erfaßt und gespeichert. Die Messung wird am Ende des Meßzyklusses, welcher erfindungsgemäß eine mit der Reaktionszeit des anzusteuernden Betriebsmittels übereinstimmende Meßdauer TM aufweist, d.h. im Zeitpunkt T2 wiederholt. Dieser "Endistwert" IE wird ebenfalls gespeichert, so daß nun durch eine einfache Subtraktion die von der aktuellen Verfahrgeschwindigkeit entlang des Verfahrweges abhängige aktuelle Größe des Vorhaltweges VW bestimmt werden kann, d.h. IE - IS = TM.

Die Berücksichtigung dieses Vorhaltweges VW, welcher vorteilhaft sowohl eine Information bezüglich der aktuelle Verfahrgeschwindigkeit als auch bezüglich der individuellen Reaktionszeit des anzusteuernden Betriebsmittels enthält, im Sinne einer Vorsteuerung kann nun einerseits dadurch erfolgen, daß alle Wegsollwerte entlang des Verfahrweges, bei deren Erreichung eine Ansteuerung des entsprechenden Betriebsmittels erfolgen soll, um die aktuelle Größe des Verfahrweges erniedrigt werden. Mit der Erfindung kann diese Berücksichtigung der Reaktionszeit eines Betriebsmittels trotz einer möglicherweise schwankenden Verfahrgeschwindigkeit durch einfache Subtraktions- bzw. Additionsrechenoperationen erreicht werden. Aufwendige Divisionen entfallen.

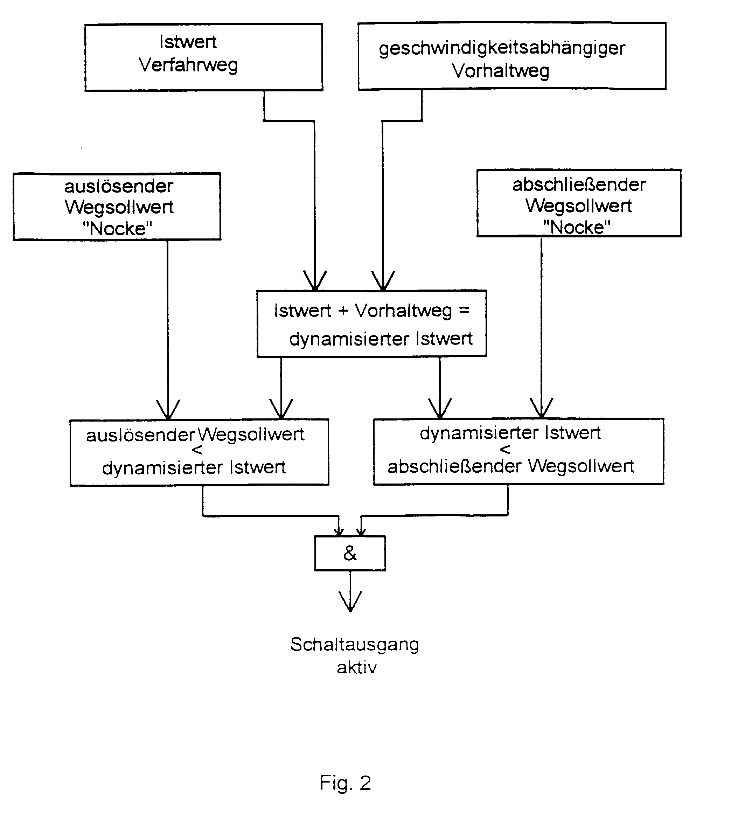

Bei einem Paar von zwei aufeinander folgenden Wegsollwerten mit entgegengesetzter Steuerrichtung entlang dem auslösenden Verfahrweg, welche als eine sogenannte "elektronische Schaltnocke" bezeichnet werden können, kann gemäß einer anderen Anwendung der Erfindung die Berücksichtigung der Reaktionszeit des anzusteuernden Betriebsmittels auch auf eine andere Weise erfolgen. Dies wird am Beispiel des Flußdiagramms von Figur 2 erläutert. Dabei wird bei der Erreichung des ersten, "auslösenden" Wegsollwertes, was mit der aktiven Flanke einer elektronischen Schaltnocke verglichen werden kann, das zugeordnete Betriebsmittel zunächst eingeschaltet. Schließlich wird bei der Erreichung des folgenden, zweiten, Wegsollwertes, was mit der inaktiven Flanke einer elektronischen Schaltnocke verglichen werden kann, das zugeordnete Betriebsmittel wieder ausgeschaltet.

In diesem Fall ist es vorteilhaft, wenn anstelle einer Verschiebung der den Ein- und Ausschaltpunkt der "Nocke" darstellenden beiden Wegsollwerte der aktuelle Istwert des von einem Positionsgeber bereitgestellten Verfahrweges um den aktuellen, geschwindigkeitsabhängigen Wert des Vorhaltweges verstellt wird, d.h. durch Addition des Vorhaltweges quasi vorgeschoben wird. Nun werden die als Start- und Stopwerte dienden, unveränderten Wegsollwerte der "Schaltnocke" mit dem um den Wert des geschwindigkeitsabhängigen Vorhaltweges vergrößerten "dynamisierten Istwert" des auslösenden Verfahrweges verglichen. Sind beide Vergleiche erfüllt, wird der Schaltausgang aktiviert, andernfalls deaktiviert.

## Patentansprüche

1. Vorrichtung zur Kompensation der Reaktionszeit eines anzusteuernden Betriebsmittels einer technischen Anlage, welches bei Erreichen eines Wegsollwertes auf einem, mit einer aktuellen Geschwindigkeit durchlaufenden Verfahrweg eines auszulösenden Betriebsmittels aktiviert, deaktiviert oder im Betriebszustand umgeschaltet werden soll,
**gekennzeichnet durch**
a) einem Positionsgeber zur Erfassung des Istwertes des Verfahrweges des auszulösenden Betriebsmittels,
b) Mitteln zur Speicherung der Reaktionszeit des anzusteuernden Betriebsmittels,
c) Mitteln zur Speicherung eines ersten Istwertes als Startistwert (T1) des Verfahrweges des auszulösenden Betriebsmittels,
d) Mitteln zur Speicherung eines zweiten Istwertes als Endistwert (T2) des Verfahrweges des auszulösenden Betriebsmittels nach Ablauf eines der Reaktionszeit des anzusteuernden Betriebsmittels entsprechenden Zeitraumes,
e) Mitteln zur Bestimmung einer aktuellen Größe eines Vorhaltwegs (VW) durch Subtraktion des ersten vom zweiten Istwertes, und
f) Mitteln zur Reduktion des Wegsollwertes als korrigierter Wegsollwert des auszulösenden Betriebsmittels um die aktuelle Größe des Vorhaltwegs (VW).

2. Vorrichtung zur Kompensation der Reaktionszeit eines anzusteuernden Betriebsmittels einer technischen Anlage, welches zwischen zwei Wegsollwerten mit entgegengesetzter Steuerrichtung auf einem, mit einer aktuellen Geschwindigkeit durchlaufenden Verfahrweg eines auszulösenden Betriebsmittels aktiviert, deaktiviert oder im Betriebszustand umgeschaltet werden soll,
**gekennzeichnet durch**
a) einem Positionsgeber zur Erfassung des Istwertes des Verfahrweges des auszulösenden Betriebsmittels,
b) Mitteln zur Speicherung der Reaktionszeit des anzusteuernden Betriebsmittels,
c) Mitteln zur Speicherung eines ersten Istwertes als Startistwert (T1) des Verfahrweges des auszulösenden Betriebsmittels,
d) Mitteln zur Speicherung eines zweiten Istwertes als Endistwert (T2) des Verfahrweges des auszulösenden Betriebsmittels nach Ablauf eines der Reaktionszeit des anzusteuernden Betriebsmittels entsprechenden Zeitraumes,
e) Mitteln zur Bestimmung einer aktuellen Größe eines Vorhaltwegs (VW) durch Subtraktion des ersten vom zweiten Istwertes, und
f) Mitteln zur Vergrößerung des Istwertes des Verfahrweges als dynamisierter Istwert des auszulösenden Betriebsmittels um die aktuelle Größe des Vorhaltwegs (VW).

## Claims

1. Device for compensating for the reaction time of an item of equipment which is to be driven and belongs to a technical plant and which, when it reaches a travel reference value on a travel of an item of equipment to be initiated, which travel is covered at a current speed, is to be activated, deactivated or switched over in the operating state,
characterized by
a) a position transmitter for registering the actual value of the travel of the item of equipment to be initiated,
b) means for storing the reaction time of the item of equipment to be driven,
c) means for storing a first actual value as a starting actual value (Tl) of the travel of the item of equipment to be initiated,
d) means for storing a second actual value as the final actual value (T2) of the travel of the item of equipment to be initiated after a time period corresponding to the reaction time of the item of equipment to be driven has elapsed,
e) means for determining a current magnitude of a lead travel (VW) by subtracting the first from the second actual value, and
f) means for reducing the travel reference value, as the corrected travel reference value, of the item of equipment to be initiated, by the current magnitude of the lead travel (VW).

2. Device for compensating the reaction time of an item of equipment which is to be driven and belongs to a technical plant and which, between two travel reference values with opposite control directions on a travel of an item of equipment to be initiated, which travel is covered at a current speed, is to be activated, deactivated or switched over in the operating state,
characterized by
a) a position transmitter for registering the actual value of the travel of the item of equipment to be initiated,
b) means for storing a first the reaction time of the item of equipment to be driven,
c) means for storing actual value as a starting actual value (T1) of the travel of the item of equipment to be initiated,
d) means for storing a second actual value as the final actual value (T2) of the travel of the item of equipment to be initiated after a time period corresponding to the reaction time of the item of equipment to be driven has elapsed,
e) means for determining a current magnitude of a lead travel (VW) by subtracting the first from the second actual value, and
f) means for increasing the actual value of the travel, as a dynamized actual value of the item of equipment to be initiated, by the current magnitude of the lead travel (VW).

## Revendications

1. Dispositif de compensation de la durée de réaction d'un moyen de fonctionnement à commander d'une installation technique, moyen qui lorsqu'est atteinte une valeur de consigne de trajet sur un trajet de déplacement d'un moyen de fonctionnement déclenchant parcouru à une vitesse instantanée, doit être activé, désactivé ou mis à l'état de fonctionnement,
caractérisé par
a) un indicateur de position servant à détecter la valeur réelle du trajet de déplacement du moyen de fonctionnement déclenchant,
b) des moyens de mémorisation de la durée de réaction du moyen de fonctionnement à commander,
c) des moyens de mémorisation d'une première valeur réelle en tant que valeur (T1) réelle initiale du trajet de déplacement du moyen de fonctionnement déclenchant,
d) des moyens de mémorisation d'une deuxième valeur réelle en tant que valeur (T2) réelle finale du trajet de déplacement du moyen de fonctionnement déclenchant après expiration d'un laps de temps correspondant à la durée de réaction du moyen de fonctionnement à commander,
e) des moyens de détermination d'une valeur instantanée d'un trajet (VW) d'anticipation par soustraction de la première valeur réelle de la deuxième valeur réelle et
f) des moyens de réduction de la valeur de consigne de trajet, en tant qu'une valeur de consigne de trajet corrigée du moyen de fonctionnement déclenchant, de la valeur instantanée du trajet (VW) d'anticipation.

2. Dispositif de compensation de la durée de réaction d'un moyen de fonctionnement à commander d'une installation technique, moyen qui lorsqu'est atteinte une valeur de consigne de trajet sur un trajet de déplacement d'un moyen de fonctionnement déclenchant parcouru à une vitesse instantanée, doit être activé, désactivé ou mis à l'état de fonctionnement,
caractérisé par
a) un indicateur de position servant à détecter la valeur réelle du trajet de déplacement du moyen de fonctionnement déclenchant,
b) des moyens de mémorisation de la durée de réaction du moyen de fonctionnement à commander,
c) des moyens de mémorisation d'une première valeur réelle en tant que valeur (T1) réelle initiale du trajet de déplacement du moyen de fonctionnement déclenchant,
d) des moyens de mémorisation d'une deuxième valeur réelle en tant que valeur (T2) réelle finale du trajet de déplacement du moyen de fonctionnement déclenchant après expiration d'un laps de temps correspondant à la durée de réaction du moyen de fonctionnement à commander,
e) des moyens de détermination d'une valeur instantanée d'un trajet (VW) d'anticipation par soustraction de la première valeur réelle de la deuxième valeur réelle et
f) des moyens pour augmenter la valeur réelle du trajet de déplacement, en tant que valeur réelle dynamisée du moyen de fonctionnement, déclenchant, de la valeur instantanée du trajet (VW) d'anticipation.
